# FASCICULE DE BREVET EUROPEEN

(11) **EP 0 797 167 B1**
(45) Date de publication et mention de la délivrance du brevet: **17.12.2003**
(21) Numéro de dépôt: 97400606.6
(22) Date de dépôt: 18.03.1997
(51) Int. Cl.: G06K 17/00

(54) **Machine de personnalisation à haute cadence**
Personifizierungsvorrichtung mit hohem Tempo
High pace personalisation apparatus

(30) Priorité: 19.03.1996 FR 9603410
(43) Date de publication de la demande: 24.09.1997
(73) Titulaire: DATACARD CORPORATION, Minnetonka, MN 55343-9015 (US)
(72) Inventeur: Omerod, Simon, 45470 Loury (FR); Nioche, Gérard, 45370 Clery Saint Andre (FR)
(74) Mandataire: Debay, Yves

(56) Documents cités:
- WO-A-94/15306
- DE-U- 8 607 989

## Description

La présente invention concerne une machine de personnalisation à haute cadence.

Il est connu des machines de personnalisation pour objet portatif tel que cartes à puces et en particulier les cartes à puces dites intelligentes c'est à dire incorporant un microprocesseur ou un microcalculateur.

Dans les machines de personnalisation de l'art antérieur (Voir par exemple WO-A-94/15306), on utilise plusieurs postes de personnalisation fixes alimentés par un bras manipulateur en cartes à puce à personnaliser. L'inconvénient de ce genre de dispositif est que le nombre de postes de personnalisation est limité par la rapidité du bras manipulateur qui doit transporter les cartes d'un poste de préhension à un poste d'insertion dans le poste de personnalisation puis ensuite, après personnalisation, les extraire pour les remettre dans la chaîne de fabrication. Une des conséquences de cette technologie est que la cadence de fabrication est limitée par la cadence du bras manipulateur vers les postes de personnalisation.

On a donc essayé de pallier cet inconvénient en disposant en sortie de chaîne de fabrication plusieurs postes de personnalisation travaillant en parallèle. Certes ceci permet d'atteindre des cadences acceptables mais présente l'inconvénient pour les personnalisations de cartes destinées à certaines applications dans lesquelles chaque carte personnalisée comporte un numéro et dans lesquelles la suite des numéros doit être continue. Dans ce type d'application, la gestion des incidents dans la technologie évoquée ci-dessus devient rapidement compliquée et on est pratiquement obligé de réduire le nombre de postes de personnalisation pour pouvoir gérer les incidents réduisant de ce fait la cadence.

Un premier but de l'invention est donc de proposer un poste de personnalisation à hautes cadences et éliminant l'utilisation d'un bras manipulateur.

Ce but est atteint par le fait que la machine de personnalisation à haute cadence comportant un dispositif de transfert d'objets portables, chaque objet portable incorporant un circuit intégré comportant au moins une mémoire est caractérisée en ce que la machine comporte un plateau rotatif dont l'axe de rotation est incliné ou parallèle par rapport à une ligne de transfert du dispositif de transfert, le plateau étant pourvu d'une pluralité de dispositifs de connexion et d'une carte électronique associée à chaque dispositif de connexion, chaque carte électronique étant reliée à un système informatique de gestion et étant disposée radialement par rapport au plateau, le système informatique de gestion des personnalisations permettant de gérer l'ensemble des cartes, afin de personnaliser les objets portables.

Selon une autre particularité chaque dispositif de connexion comprend une platine fixe et un ensemble mobile guidé en translation vers la platine fixe et comportant une tête de connexion, ledit ensemble mobile étant sollicité en permanence par un dispositif presseur en direction de la platine fixe solidaire du plateau rotatif.

Selon une autre particularité chaque dispositif de connexion est amené successivement à un poste de chargement et de déchargement.

Selon une autre particularité le plateau rotatif a une forme tronconique de façon qu'une face du cône soit parallèle au dispositif de transfert.

Selon une autre particularité le plateau comporte des moyens d'entraînements et de positionnements angulaires permettant d'arrêter chaque platine à la hauteur des objets portables et dans l'alignement des moyens de guidage du transfert des objets portables.

Selon une autre particularité la machine comporte des moyens de commande d'avancement d'un poste à un autre du dispositif de transfert et d'arrêt d'un objet portable en vis à vis du dispositif de connexion amené dans le chemin du dispositif de transfert.

Selon une autre particularité la machine comporte des moyens de commande du séquencement et de la gestion de la personnalisation.

Un autre but de l'invention est d'obtenir une machine de personnalisation qui permet de personnaliser un nombre de cartes à une cadence élevée tout en assurant la continuité des numéros de personnalisation des cartes.

Ce but est atteint par le fait que des moyens de commande du séquencement déclenchent une séquence de substitution lorsque les moyens de gestion de personnalisation signalent un défaut de personnalisation sur un objet portable, au moins un dispositif de connexion disposé dans une position du plateau étant gardé en position de réserve et chargé avec un objet portable de réserve, les moyens de gestion de personnalisation déclenchant la personnalisation de l'objet portable de cette position de réserve lorsque les moyens de gestion ont détecté un défaut de personnalisation sur une autre carte dite défectueuse disposée dans un dispositif de connexion ; les moyens de commande du séquencement assurant le déchargement des objets portables personnalisés positionnés antérieurement à l'objet portable défectueux puis le déchargement de l'objet portable défectueux et un cycle de personnalisation sur la carte de position de réserve déchargée en fin de cycle de personnalisation sur le dispositif de transfert puis le chargement d'une nouvelle carte de réserve sur cette position de réserve avant de reprendre la position permettant le déchargement de l'objet portable disposé immédiatement après l'objet portable défectueux.

Selon une autre particularité la machine comporte un dispositif dépileur de carte en entrée de machine, un dispositif empileur en sortie de machine, un poste de test électrique entre le plateau de personnalisation et le dispositif dépileur et un poste d'éjection avant le poste de chargement sur le plateau de personnalisation.

Selon une autre particularité la machine comporte un second poste d'éjection en sortie du plateau de personnalisation.

Selon une autre particularité le second poste d'éjection est activé lorsqu'une carte dont la personnalisation a été défectueuse passe devant ce poste.

Selon une autre particularité la machine comporte en aval du second poste d'éjection disposé en aval du plateau de personnalisation un poste de retournement associé à un poste de marquage d'encre et le dispositif d'empilage des cartes.

D'autres particularités et avantages de la présente invention apparaîtront plus clairement à la lecture de la description ci-après faite en référence aux dessins annexés dans lesquels :
la figure 1 représente une vue en élévation de face de la machine de personnalisation ;
la figure 2 représente une vue de dessus de la machine de personnalisation ;
la figure 3 représente une vue en perspective du poste d'introduction des cartes dans le plateau de personnalisation ;
la figure 4 représente une vue de gauche d'une des têtes de connexion du plateau de personnalisation ;
la figure 5 représente une vue de dessus du plateau de personnalisation et du chemin de transfert.

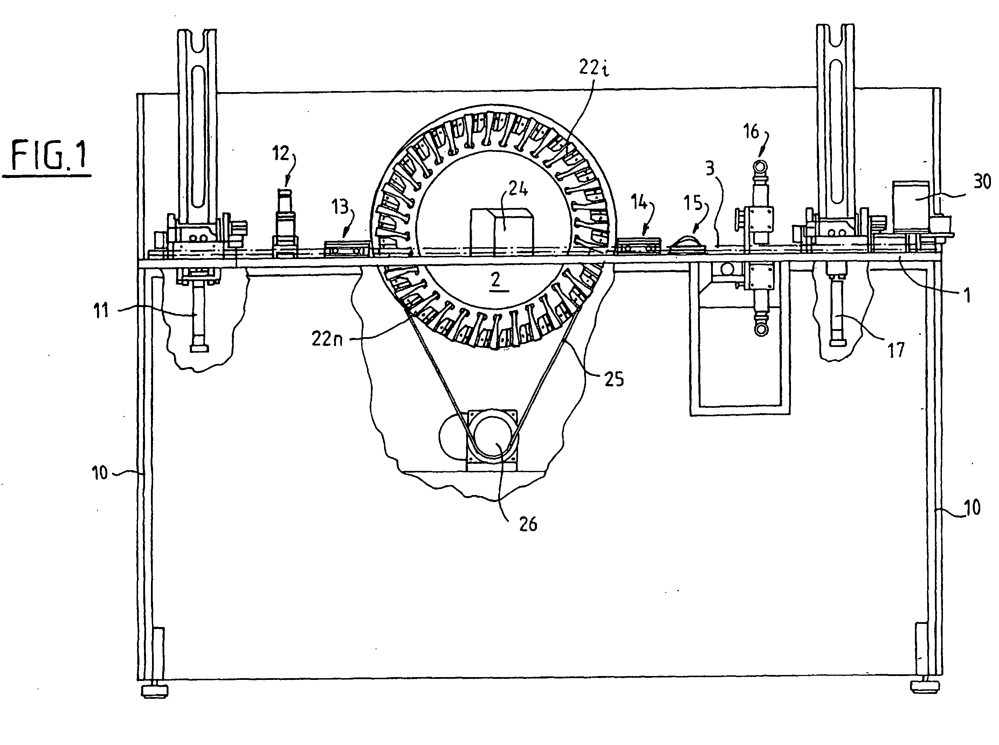

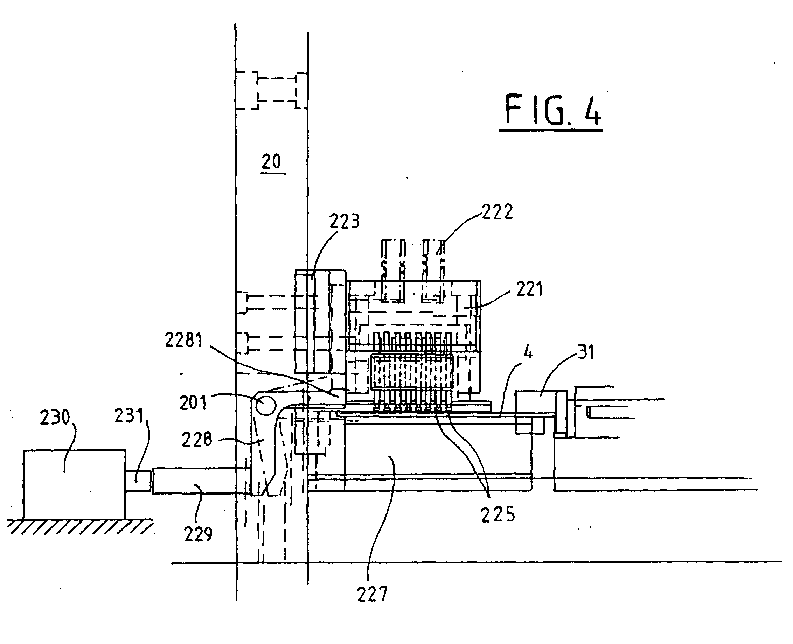

L'invention qui va être décrite en liaison avec les figures 1 à 5 est constituée d'une table (1) montée sur des pieds (10) sur le plateau de laquelle est disposé un chemin de transfert formé par une courroie crantée (3) continue circulant entre deux poulies (33, 32) d'extrémité dont l'une est entraînée par un moteur (30).

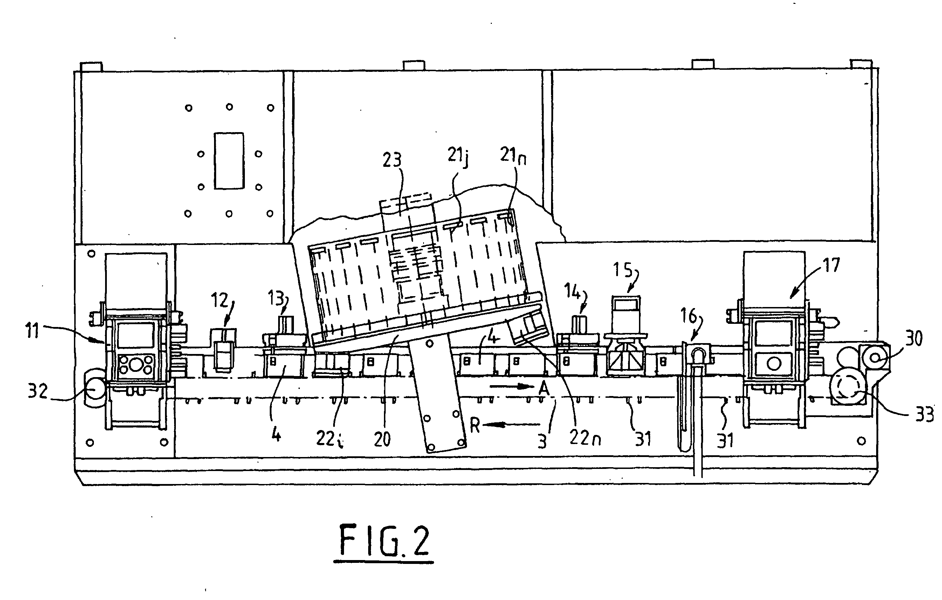

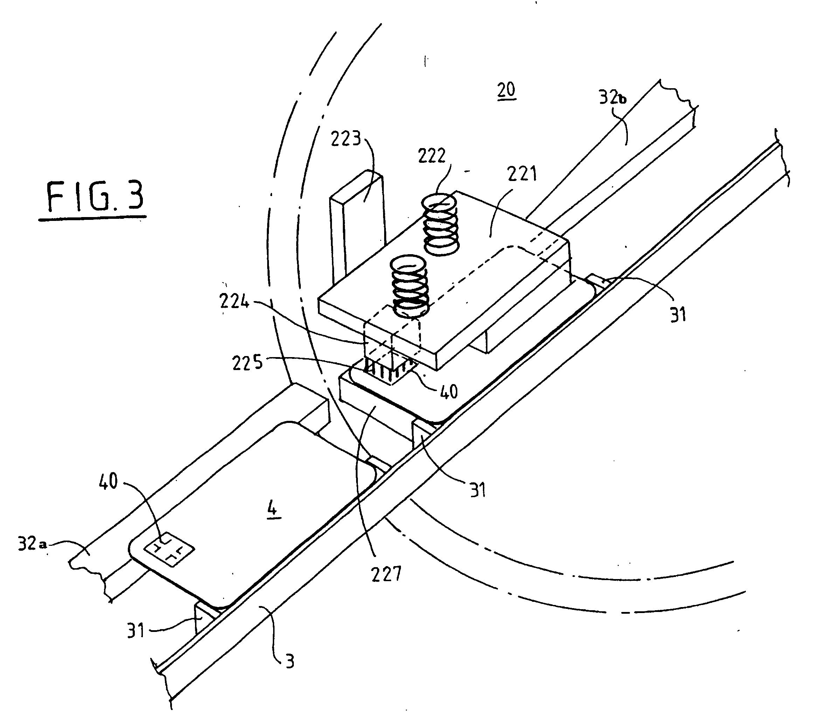

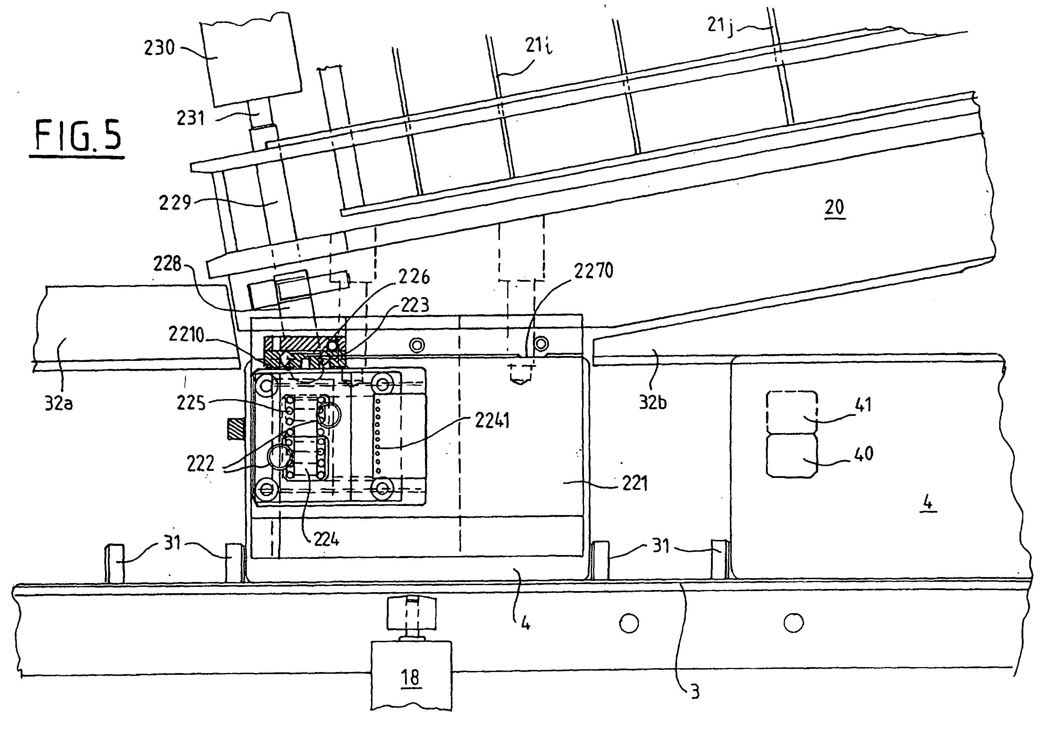

Sur cette courroie sans fin (3) sont montés à intervalle régulier, par paires, des taquets (31) dont la distance entre deux taquets (31) consécutifs correspond à la longueur d'un objet portable (4) de la taille d'une carte de crédit ci-après appelé carte à puce. Chaque paire de taquets (31) distants d'une longueur de carte de crédit est adjacente de la paire suivante d'une longueur plus courte. Les taquets (31) permettent le maintien des objets portables (4) pendant le déplacement sur la partie aller du chemin représentée par la flèche (A) sur la figure 2, et l'entraînement des cartes à puces d'un poste vers un autre. Pour plus de détail sur les taquets (31) et le dispositif de transfert on peut se référer à la demande de brevet européen 0 589 771 du même déposant. Le chemin de transfert est complété comme on peut le voir sur les figures 5 et 3 par des rails d'appui (32a, 32b) qui sont interrompus au poste de chargement/déchargement pour permettre le passage des têtes de connexion (22i) solidaires d'un plateau tournant (20) comme on le verra ultérieurement.

La table comporte un dispositif dépileur (11) qui à partir d'un lot de cartes empilées distribue les cartes et les insère une par une entre chaque paire de taquets (31). Les cartes ainsi introduites dans le chemin de transfert (A) sont ensuite amenées à un poste (12) de test électrique permettant, par un test électrique simple, d'éliminer les cartes mauvaises assurant ainsi une première détection rapide dans un temps de l'ordre de 0,5 secondes. Le dépileur (11) comporte un double magasin d'entrée permettant l'approvisionnement sans arrêt de la machine, l'échange des magasins s'effectuant en temps masqué. Chaque magasin est amovible avec une contenance de 500 cartes. Les cartes (4) testées sont ensuite transférées à un poste d'éjection (13) qui permet d'éjecter les cartes mauvaises ramenant le nombre de cartes défectueuses de 4 ‰ à 2 ‰. Les cartes ayant franchi le test électrique avec succès sont transférées ensuite du poste d'éjection (13) au poste de personnalisation (2). Ce poste de personnalisation comporte un plateau tournant (20) dont l'axe de rotation est d'une part horizontal et parallèle au plateau de la table (1) et d'autre part incliné par rapport au chemin de transfert (A). Ce plateau tournant (20) à une section tronconique dont un côté du tronc de cône, du fait de l'inclinaison de l'axe de rotation du plateau, est parallèle au chemin de transfert (A). La face latérale inclinée du tronc de cône supporte sur son pourtour une pluralité de dispositifs de connexion (22i, 22n) de façon que chaque dispositif de connexion (22i, 22n) puissent venir s'intercaler dans le cheminement des cartes entre le rail de guidage (32a) de l'arrivée des cartes et le rail (32b) de guidage en sortie du système de personnalisation. Les dispositifs de connexion (22i) sont de dimension légèrement inférieure aux cartes et ménagent entre leur bord extérieur et la courroie crantée (3) un espace. Un dispositif à vérin (18) permet de pousser vers le plateau (20) chaque carte, une fois que celle-ci a été amenée entre les deux éléments du dispositif de connexion (22i) en appui sur les surfaces de référence (2270) de la partie fixe (227) du dispositif de connexion. Chaque dispositif de connexion (22i) à une carte à puce (4) comporte un plateau fixe (227) solidaire de la face inclinée du tronc de cône du plateau tournant (20), et une colonne de guidage (223) solidaire du plateau (20) pour guider un élément mobile (221) supportant une tête de connexion (224). Chaque tête de connexion (224) comporte une pluralité d'aiguilles (225) montées sur des moyens élastiques et reliées électriquement à un connecteur (2241) qui assure la connexion avec une nappe de fil provenant d'une carte électronique (22i) de gestion de la tête de connexion (224). A chaque tête de connexion (224) d'un dispositif connexion (22i) est associée une carte de personnalisation (21i) disposée sur la face opposée du plateau tournant (20) et orientée radialement vers le centre de ce plateau (20). La partie mobile (221) du dispositif de connexion (22i) à une carte à puce est en permanence sollicitée en direction de la partie fixe (227) par des moyens élastiques (222) prenant appui sur une partie fixe du plateau (20). Un levier en L (228) permet par son extrémité (2281 ) d'agir sur le guide (2210) solidaire de la tête (224) et de la partie mobile (221) pour soulever la tête (224) et ménager entre les aiguilles de contact (225) et la partie fixe (227) un espace suffisant pour permettre le passage des cartes (4) transportées par le chemin de transfert et la courroie crantée (3). Le levier (228) est actionné pour soulever la tête de connexion (224) par un doigt (229) solidaire du plateau tournant (20) disposé en face de chaque levier (228) associé à chaque dispositif de connexion (22i). Lorsqu'un dispositif de connexion (22i) vient se placer au poste d'introduction et d'évacuation des cartes en intercalant dans le chemin de transfert entre les guides d'arrivée (32a) et de départ (32b), le doigt d'actionnement du levier (228) se trouve en face d'un vérin (230) dont le piston (231) vient soulever les têtes. Ceci permet de libérer la carte à puce (4) puis, par un déplacement de la courroie (3) dans le sens de la flèche (A) figure 2, de déplacer la carte personnalisée et en même temps d'amener la carte à puce suivante dans le dispositif de connexion (22i) qui vient de terminer la personnalisation. La carte personnalisée ou sortant du plateau est transportée par la courroie (3) vers le poste d'éjection (14). Ce poste d'éjection (14) permet d'éliminer les cartes dont la personnalisation a été incomplète ou défectueuse. Si la personnalisation a réussit la carte est transférée au poste (15) de retournement pour ensuite permettre sur son autre face son marquage à l'encre par un poste de marquage (16). Enfin la carte est transportée vers un dispositif empileur (17) classique où elle est empilée dans un magasin double fonctionnant selon le même principe que le dispositif dépileur (11) mais en sens inverse. Le plateau tournant (20) peut ainsi comporter un grand nombre de dispositifs de connexion (22i) associés chacun à une carte de personnalisation (21i) qui gère la personnalisation de la carte à puce (4) insérée par la courroie de transfert (3) dans le dispositif de connexion (22i) auquel la carte de personnalisation (21i) est reliée. Le plateau peut comporter ainsi, par exemple, 32 ou 16 dispositifs de connexion (22i) associés à autant de cartes de personnalisation. Chacune des cartes de personnalisation étant reliée en réseau à un ordinateur embarqué dans le rack du plateau rotatif. L'ordinateur embarqué de type PC est relié à un second ordinateur de type PC disposé ou non sur la table de la machine. La liaison entre le système embarqué en rotation et l'installation fixe est assurée par un collecteur tournant. La connexion se fait par des contacts fixes solidaires de la partie fixe de la machine appuyant sur un ensemble de pistes tournantes solidaires du plateau tournant. De même les alimentations, nécessaires au fonctionnement du matériel embarqué sur le plateau tournant s'effectuent, par des contacts fixes qui sont en appui sur les pistes d'alimentation. Cet ordinateur comporte le logiciel de gestion des personnalisations des cartes et permet de gérer également le marquage à l'encre.

Enfin un autre P.C. gère la commande séquentielle de la machine et reçoit les informations des différents dispositifs de positionnement tel que le codeur angulaire de position du plateau (20), les différents dispositifs de détection permettant de s'assurer de la mise en place d'une carte transportée par la courroie (3) en vis à vis du poste adéquat et de détecter la position de la connexion (3). L'axe de rotation du plateau (20) est entraîné par un moteur synchrone (26) par l'intermédiaire d'une transmission par courroie crantée (25). Les positions des dispositifs de connexion (22i) sont suivies par un codeur absolu non représenté.

En fonctionnement le dispositif de transfert à courroie (3) extrait une carte (4) dont la personnalisation est terminée du plateau tournant (20) et introduit une nouvelle carte à puce dans le dispositif de connexion (22i) dont la position vient de se libérer puis après introduction une rotation d'une position du plateau (20) est effectuée. La personnalisation dure au minimum pendant toute la durée de rotation d'un tour complet et après un tour complet du plateau (20) la carte personnalisée vient se replacer dans le chemin de transfert entre deux taquets libres (31). Puis cette carte est extraite du dispositif de connexion (22i) par déplacement de la courroie transfert (3) après relevage de la tête (224) et du presseur (221). Lorsque le plateau (20) comporte un ensemble de 32 dispositifs de connexion et avec une vitesse de déplacement d'un poste à un autre de l'ordre de une carte par seconde, la machine permet d'atteindre une capacité de personnalisation de 3000 cartes par heure avec un temps maximum de personnalisation de l'ordre de 32 secondes.

Dans une variante de l'invention, sur les 32 positions d'introduction de cartes, seuls 30 dispositifs de connexion prévus normalement pour la personnalisation sont utilisés. En effet, dans cette variante d'utilisation deux têtes en attente sont chargées lors de leur passage au poste de chargement à chaque fois avec une carte, que lorsque la carte aura été utilisée. Tant que les personnalisations sur les 30 autres têtes se déroulent sans incident ces deux têtes restent inutilisées. Lorsqu'en cours de personnalisation d'une carte un problème de personnalisation est détecté, la carte de communication signale cet état de chose au P.C. qui déclenche immédiatement la procédure de substitution assurant la personnalisation d'une des deux cartes placées dans les têtes en attente. Le P.C. choisit la tête située le plus près du poste de chargement par rapport au sens de rotation du plateau. Le numéro de carte dans le processus de numérotation contenue qui était affecté à la carte défectueuse est alors affecté à la carte utilisée dans la tête d'attente sélectionnée et la personnalisation de cette carte s'effectue. Toutes les cartes dont la personnalisation était en cours et disposées en aval de la carte défectueuse, c'est à dire introduites antérieurement sur le plateau tournant (20), sont déchargées au fur et à mesure de leur présentation au poste de chargement/déchargement et remplacées par une carte amenée par la courroie de transfert (3). La carte défectueuse est entraînée par la courroie de transfert (3) au poste d'éjection (14) où elle est éjectée. Le plateau de personnalisation (20) attend la fin de la personnalisation de la carte de substitution désignée dans la tête en attente. Lorsque la personnalisation de cette carte est terminée, le plateau (20) est entraîné en rotation pour amener la tête de réserve correspondante dans le cheminement du chemin de transfert (3). La carte de substitution est alors évacuée, puis la rotation du plateau se poursuit à nouveau pour ramener le plateau dans la position de déchargement de la première carte suivant la carte défectueuse dont la personnalisation est terminée.

Avec ce mode de fonctionnement on permet ainsi de personnaliser les cartes, en s'assurant que le numéro inscrit dans les cartes forme une suite continue même lorsqu'une carte s'avère défectueuse et que sa personnalisation n'a pas pu être effectuée. Ceci permet d'absorber en moyenne 6 % de cartes mauvaises c'est à dire 2 positions sur 30 alors que le taux de défaut subsistant après le premier test électrique du poste (12) est en général de 2 ‰. Pour un taux de 2 ‰ la perte de cadence deJa machine est au maximum de 200 cartes par heure. Avec cette machine on peut donc obtenir des cadences élevées de personnalisation proches de 3000 cartes par heure. Dans les applications où cela s'avère nécessaire il est possible d'assurer que les cartes personnalisées ont un numéro de série qui forme une suite continue. Les cartes dont la personnalisation n'a pas pu être assurée, sont éjectées en cours de processus. Chaque position de dispositif de connexion est repérée par le codeur, les cartes à puce (4) introduites dans le plateau (20) sont suivies par l'ordinateur de type P.C. connecté au plateau tournant (20) par sa carte de communication et l'ordinateur viendra modifier la séquence normale de fonctionnement de la machine de façon à la remplacer par la séquence de substitution lorsque la détection d'une carte défectueuse sera signalée par une des cartes électroniques (21i) de personnalisation associée à une tête de connexion (22i).

Bien sûr, l'invention n'est pas limitée à l'exemple de réalisation décrit ci-dessus. Ainsi, l'axe de rotation du plateau (20) tournant peut avoir toute autre orientation par rapport au chemin de transfert (A), sa forme étant adaptée en conséquence de façon que chaque dispositif de connexion (22i, 22n) puisse venir dans le cheminement des cartes entre le rail de guidage (32a) de l'arrivée des cartes et le rail (32b) de guidage en sortie du système de personnalisation.

Par exemple, l'axe de rotation du plateau (20) peut être sensiblement parallèle par rapport au chemin de transfert (A), les dispositifs de connexion (22i, 22n) étant répartis radialement sur la surface périphérique du plateau (2b) qui peut être cylindrique.

## Revendications

1. Machine de personnalisation à haute cadence comportant un dispositif de transfert (3, 31) d'objets portables (4), chaque objet portable incorporant un circuit intégré comportant au moins une mémoire **caractérisée en ce que** la machine comporte un plateau rotatif (20) dont l'axe de rotation est incliné ou parallèle par rapport à une ligne de transfert du dispositif de transfert (3, 31), le plateau étant pourvu d'une pluralité de dispositifs de connexion (22i) et d'une carte électronique (21i) associée à chaque dispositif de connexion (22i), chaque carte électronique (21i) étant reliée à un système informatique de gestion et étant disposée radialement par rapport au plateau (20), le système informatique de gestion des personnalisations permettant de gérer l'ensemble des cartes (21i) afin de personnaliser les objets portables.

2. Machine de personnalisation à haute cadence selon la revendication 1, **caractérisée en ce que** chaque dispositif de connexion comprend une platine fixe (227) et un ensemble mobile (221) guidé en translation vers la platine fixe et comportant une tête de connexion (224), ledit ensemble mobile étant sollicité en permanence par un dispositif presseur (222) en direction de la platine fixe (227) solidaire du plateau rotatif (20).

3. Machine de personnalisation à haute cadence selon la revendication 2, **caractérisée en ce que** chaque dispositif de connexion (224) est amené successivement à un poste de chargement et de déchargement.

4. Machine de personnalisation à haute cadence selon une des revendications 1 à 3, **caractérisée en ce que** le plateau rotatif (20) a une forme tronconique de façon qu'une face du cône soit parallèle au dispositif de transfert.

5. Machine de personnalisation à haute cadence selon une des revendications 2 à 4, **caractérisée en ce que** le plateau (20) comporte des moyens d'entraînements et de positionnements angulaires permettant d'arrêter chaque platine (227) à la hauteur des objets portables (4) et dans l'alignement des moyens de guidage (32a) du transfert des objets portables.

6. Machine de personnalisation à haute cadence selon une des revendications 1 à 5, **caractérisée en ce qu'**elle comporte des moyens de commandes d'avancement d'un poste à un autre du dispositif de transfert (3, 31) et d'arrêt d'un objet portable (4) en vis à vis du dispositif de connexion (22i) amené dans le chemin du dispositif de transfert.

7. Machine de personnalisation à haute cadence selon une des revendications 1 à 6, **caractérisée en ce qu'**elle comporte des moyens de commande du séquencement et de la gestion de la personnalisation.

8. Machine selon la revendication 7 **caractérisée en ce que** les moyens de commande du séquencement déclenchent une séquence de substitution lorsque les moyens de gestion de personnalisation signalent un défaut de personnalisation sur un objet portable, au moins un dispositif de connexion disposé dans une position du plateau étant gardé en position de réserve et chargé avec un objet portable de réserve, les moyens de gestion de personnalisation déclenchant la personnalisation de l'objet portable de cette position de réserve lorsque les moyens de gestion ont détecté un défaut de personnalisation sur une carte dite défectueuse disposée dans un dispositif de connexion ; les moyens de commande du séquencement assurant le déchargement des objets portables personnalisés positionnés antérieurement à l'objet portable défectueux puis le déchargement de l'objet portable défectueux et un cycle de personnalisation sur la carte de position de réserve déchargée en fin de cycle de personnalisation sur le dispositif de transfert puis le chargement d'une nouvelle carte de réserve sur cette position avant de reprendre la position de réserve permettant le déchargement de l'objet portable disposé immédiatement après l'objet portable défectueux.

9. Machine selon la revendication 8, **caractérisés en ce que** la machine comporte un dispositif dépileur (11) de carte en entrée de machine, un dispositif empileur (17) en sortie de machine, un poste de test électrique (12) entre le plateau de personnalisation (20) et le dispositif dépileur (11) et un poste d'éjection (13) avant le poste de chargement sur le plateau de personnalisation (20).

10. Machine selon une des revendications 1 à 9, **caractérisés en ce que** la machine comporte un second poste d'éjection (14) en sortie du plateau de personnalisation (20).

11. Machine selon la revendication 10 **caractérisée en ce que** le second poste d'éjection est activé lorsqu'une carte dont la personnalisation a été défectueuse passe devant ce poste.

12. Machine selon une des revendications 10 à 11 **caractérisée en ce qu'**elle comporte en aval du second poste d'éjection (14) disposé en aval du plateau de personnalisation (20) un poste de retournement (15) associé à un poste de marquage (16) d'encre et le dispositif (17) d'empilage des cartes.

## Claims

1. High-speed personalisation machine comprising a transfer device (3, 31) for portable objects (4), each portable object incorporating an integrated circuit comprising at least one memory, **characterised in that** the machine comprises a rotary plate (20) the axis of rotation of which is inclined or parallel with respect to a transfer line of the transfer device (3, 13), the plate being provided with a plurality of connection devices (22i) and an electronic card (21i) associated with each connection device (22i), each electronic card (21i) being connected to a computerised management system and being arranged radially with respect to the plate (20), the computerised personalisation management system making it possible to manage all the cards (21i) in order to personalise the portable objects.

2. High-speed personalisation machine according to Claim 1 **characterised in that** each connection device includes a fixed plate (227) and a mobile assembly (221) guided in translation towards the fixed plate and comprising a connecting head (224), said mobile assembly being continuously acted upon by a pressing device (222) in the direction of the fixed plate (227) integral with the rotary plate (20).

3. High-speed personalisation machine according to Claim 2, **characterised in that** each connection device (224) is brought in succession to a loading and unloading station.

4. High-speed personalisation machine according to one of Claims 1 to 3, **characterised in that** the rotary plate (20) has the shape of a truncated cone such that one face of the cone is parallel to the transfer device.

5. High-speed personalisation machine according to one of Claims 2 to 4 **characterised in that** the plate (20) comprises driving and angular positioning means making it possible to stop each plate (227) level with the portable objects (4) and in alignment with the guide means (32a) for the transfer of the portable objects.

6. High-speed personalisation machine according to one of Claims 1 to 5, **characterised in that** it comprises means for controlling forward movement from one station to another of the transfer device (3, 31) and for stopping a portable object (4) facing the connection device (22i), which is brought into the path of the transfer line.

7. High-speed personalisation machine according to one of Claims 1 to 6, **characterised in that** it comprises means for control of the sequencing and for management of the personalisation.

8. Machine according to Claim 7 **characterised in that** the sequencing control means trigger a substitution sequence when the personalisation management means indicate a personalisation fault on a portable object, at least one connection device arranged in a position on the plate being kept in backup position and loaded with a backup portable object, the personalisation management means triggering the personalisation of the portable object in this backup position when the management means have detected a personalisation fault on a card said to be faulty placed in a connection device; the sequencing control means ensuring the unloading of the personalised portable objects located in front of the faulty portable object and then the unloading of the faulty portable object and a personalisation cycle on the card in the backup position, unloaded at the end of the personalisation cycle onto the transfer device then the loading of a new backup card in this position before returning to the backup position, which makes it possible to unload the portable object placed immediately after the faulty portable object.

9. Machine according to Claim 8, **characterised in that** the machine comprises a card unstacking device (11) at the entrance to the machine, a stacking device (17) at the exit from the machine, an electrical testing station (12) between the personalisation plate (20) and the unstacking device (11) and an ejection station (13) before the station for loading onto the personalisation plate (20).

10. Machine according to one of Claims 1 to 9, **characterised in that** the machine comprises a second ejection station (14) at the exit from the personalisation plate (20).

11. Machine according to Claim 10, **characterised in that** the second ejection station is activated when a card, the personalisation of which has been faulty moves in front of this station.

12. Machine according to one of Claims 10 to 11, **characterised in that** it comprises, downstream from the second ejection station (14) arranged downstream from the personalisation plate (20), a turning station (15) associated with an ink marking station (16) and the card stacking device (17).

## Patentansprüche

1. Personalisierungsmaschine mit hohem Arbeitstakt, die eine Transportvorrichtung (3, 31) für tragbare Gegenstände (4) umfaßt, wobei jeder tragbare Gegenstand eine integrierte Schaltung mit mindestens einem Speicher enthält, **dadurch gekennzeichnet, daß** die Maschine eine Drehscheibe (20) umfaßt, deren Drehachse geneigt oder parallel ist zu einer Transportstrecke der Transportvorrichtung (3, 31), wobei die Scheibe ausgestattet ist mit mehreren Kontaktierungsvorrichtungen (22i) und jeweils einer jeder Kontaktierungsvorrichtung (22i) zugeordneten Elektronikkarte (21i), wobei jede Elektronikkarte (21i) mit einem Datenverarbeitungssystem für die Steuerung verbunden und radial zur Scheibe (20) angeordnet ist, wobei das Datenverarbeitungssystem für die Steuerung der Personalisierungen es erlaubt, sämtliche Karten (21i) zu steuern, um die tragbaren Gegenstände zu personalisieren.

2. Personalisierungsmaschine mit hohem Arbeitstakt nach Anspruch 1, **dadurch gekennzeichnet, daß** jede Kontaktierungsvorrichtung folgendes umfaßt: eine feste Platte (227) und einen beweglichen Aufbau (221), der translationsverschiebbar in Richtung der festen Platte geführt ist und einen Kontaktkopf (224) enthält, wobei der bewegliche Aufbau ständig durch eine Druckvorrichtung (222) in Richtung der festen Platte (227), die starr mit der Drehscheibe (20) verbunden ist, gedrückt wird.

3. Personalisierungsmaschine mit hohem Arbeitstakt nach Anspruch 2, **dadurch gekennzeichnet, daß** jede Kontaktierungsvorrichtung (224) nacheinander zu einer Ladestation und einer Entladestation geführt wird.

4. Personalisierungsmaschine mit hohem Arbeitstakt nach einem der Ansprüche 1 bis 3, **dadurch gekennzeichnet, daß** die Drehscheibe (20) eine solche kegelstumpfartige Form hat, daß eine Seite des Kegels parallel zur Transportvorrichtung liegt.

5. Personalisierungsmaschine mit hohem Arbeitstakt nach einem der Ansprüche 2 bis 4, **dadurch gekennzeichnet, daß** die Scheibe (20) Mittel zum winkelmäßigen Antrieb und Mittel zur winkelgetreuen Positionierung enthält, die es erlauben, jede Platte (227) auf Höhe der tragbaren Gegenstände (4) und an den Transportführungseinrichtungen (32a) der tragbaren Gegenstände ausgerichtet anzuhalten.

6. Personalisierungsmaschine mit hohem Arbeitstakt nach einem der Ansprüche 1 bis 5, **dadurch gekennzeichnet, daß** sie Steuerungsvorrichtungen für die Vorwärtsbewegung eines tragbaren Gegenstandes von einer Station zu einer anderen Station der Transportvorrichtung (3, 31) und Steuerungsvorrichtungen zum Stoppen eines tragbaren Gegenstandes (4) gegenüber der Kontaktierungsvorrichtung (22i), die in die Bahn der Transportvorrichtung gebracht wurde, umfaßt.

7. Personalisierungsmaschine mit hohem Arbeitstakt nach einem der Ansprüche 1 bis 6, **dadurch gekennzeichnet, daß** sie Steuerungsvorrichtungen für den Ablauf und die Verwaltung der Personalisierung umfaßt.

8. Maschine nach Anspruch 7, **dadurch gekennzeichnet, daß** die Steuerungsvorrichtungen für den Ablauf eine Austauschfolge dann auslösen, wenn die Steuerungsvorrichtungen für die Verwaltung der Personalisierung einen Personalisierungsfehler auf einem tragbaren Gegenstand signalisieren, wobei mindestens eine Kontaktierungsvorrichtung, die sich in einer Position der Scheibe befindet, in Reserveposition gehalten und mit einem tragbaren Reservegegenstand geladen ist, wobei die Steuerungsvorrichtungen zur Personalisierung die Personalisierung des tragbaren Gegenstandes dieser Reserveposition auslösen, wenn die Steuerungsvorrichtungen einen Personalisierungsfehler auf einer als defekt bezeichneten Karte detektiert haben, die sich in einer Kontaktierungsvorrichtung befindet; wobei die Steuerungsvorrichtungen für den Ablauf die Entladung der personalisierten tragbaren Gegenstände, die vor dem defekten tragbaren Gegenstand positioniert sind, sicherstellen und dann die Entladung des defekten tragbaren Gegenstandes sicherstellen und weiterhin sicherstellen, daß auf der Karte in der Reserveposition ein Personalisierungszyklus durchgeführt wird und am Ende des Personalisierungszyklus die Karte auf die Transportvorrichtung entladen wird und dann eine neue Reservekarte auf diese Position geladen wird, bevor die Reserveposition wieder eingenommen wird, um das Entladen des tragbaren Gegenstandes, der unmittelbar nach dem defekten tragbaren Gegenstand liegt, zu ermöglichen.

9. Maschine nach Anspruch 8, **dadurch gekennzeichnet, daß** die Maschine folgendes umfaßt: eine Stapelabnehmervorrichtung (11) für Karten am Eingang der Maschine, eine Stapelvorrichtung (17) am Ende der Maschine, eine Station für einen elektrischen Test (12) zwischen der Personalisierungsscheibe (20) und der Stapelabnehmervorrichtung (11) und eine Auswurfstation (13) vor der Station zum Beladen der Personalisierungsscheibe (20).

10. Maschine nach einem der Ansprüche 1 bis 9, **dadurch gekennzeichnet, daß** die Maschine eine zweite Auswurfstation (14) am Ausgang der Personalisierungsscheibe (20) enthält.

11. Maschine nach Anspruch 10, **dadurch gekennzeichnet, daß** die zweite Auswurfstation aktiviert wird, wenn eine Karte, deren Personalisierung fehlerhaft war, diese Station passiert.

12. Maschine nach einem der Ansprüche 10 bis 11, **dadurch gekennzeichnet, daß** sie nach der zweiten Auswurfstation (14), die im Anschluß an die Personalisierungsscheibe (20) positioniert ist, eine Umdrehstation (15) umfaßt, die mit einer Tintenmarkierungsstation (16) und der Stapelvorrichtung (17) für Karten verbunden ist.
